# EUROPÄISCHE PATENTSCHRIFT

(11) **EP 1 499 411 B1**
(45) Veröffentlichungstag und Bekanntmachung des Hinweises auf die Patenterteilung: **08.08.2007**
(21) Anmeldenummer: 03727226.7
(22) Anmeldetag: 02.05.2003
(51) Int. Cl.: B01D 11/04, C12P 13/04

(54) **INTEGRIERTE ABTRENNUNG ORGANISCHER SUBSTANZEN AUS EINEM WÄSSRIGEN BIOPROZESSGEMISCH**
INTEGRATED SEPARATION OF ORGANIC SUBSTANCES FROM AN AQUEOUS BIO-PROCESS MIXTURE
SEPARATION INTEGREE DE SUBSTANCES ORGANIQUES CONTENUES DANS UN MELANGE AQUEUX DE BIOPROCEDE

(30) Priorität: 06.05.2002 DE 10220235
(43) Veröffentlichungstag der Anmeldung: 26.01.2005
(73) Patentinhaber: DSM Biotech GmbH, 52428 Jülich (DE)
(72) Erfinder: RÜFFER, Nicole, 52064 Aachen (DE); WANDREY, Christian, 52428 Jülich (DE); TAKORS, Ralf, 52399 Merzenich (DE)
(74) Vertreter: Heijman, Renske Harriët
(86) Internationale Anmeldenummer: PCT/DE2003/001412
(87) Internationale Veröffentlichungsnummer: WO 2003/092853

(56) Entgegenhaltungen:
- WO-A-00/66253
- US-A- 4 939 087
- PATENT ABSTRACTS OF JAPAN vol. 012, no. 299 (C-520), 15. August 1988 (1988-08-15) & JP 63 071189 A (AJINOMOTO CO INC), 31. März 1988 (1988-03-31)
- SCHUGERL K: "Integrated processing of biotechnology products" BIOTECHNOLOGY ADVANCES, ELSEVIER PUBLISHING, BARKING, GB, Bd. 18, Nr. 7, 1. November 2000 (2000-11-01), Seiten 581-599, XP004317587 ISSN: 0734-9750
- Z.LIKIDIS, K.SCHÜGERL: "Recovery of Penicillin by reactive extraction in centrifugal extractors" BIOTECHNOLOGY AND BIOENGINEERING, Bd. 30, Nr. 9, 14. April 1987 (1987-04-14), Seiten 1032-1040, XP001154035
- K.H.BRUNNER,H.SCHERFLER,M.STÖLTING: "Erfahrungen mit dem Gegenstromextraktionsdekanter bei der Gewinnung von Antibiotika aus Fermentationsbrühen" VERFAHRENSTECHNIK, Bd. 15, Nr. 9, September 1981 (1981-09), Seiten 619-622, XP009015468

## Beschreibung

Die vorliegende Erfindung betrifft ein Verfahren zur integrierten Abtrennung aus einem Bioreaktor von einer oder mehreren in einem wässrigen Bioprozessgemisch vorhandenen organischen Substanzen enthaltend zumindest eine positiv geladene stickstoffhaltige Gruppe und/oder zumindest eine positiv aufladbare stickstoffhaltige Gruppe in welchem Verfahren Reaktivextraktion in wenigstens einem Schritt durchgeführt wird mit einem Extraktionsmittel. Unter Bioprozessgemisch wird im Rahmen dieser Patentanmeldung jedes Prozessgemisch verstanden, in dem eine biokatalytische Reaktion verläuft, z. B. eine Fermentation mit Hilfe von Biomasse oder ein chemisch/enzymatischer Prozess mit Hilfe von gelösten, oder Carrier-gebundenen, Enzymen. Die genannten Prozesse können entweder aerob oder anaerob ablaufen und als Batch- oder (Semi-)-Kontinuierliche Prozesse betrieben werden.

Techniken zur Separation organischer Verbindungen aus wässrigen Lösungen (bzw. Prozessgemischen) sind zahlreich bekannt. Hierzu zählen beispielsweise die Auftrennung über Ionenaustauscherharze, Chromatographieverfahren, Adsorption, Filtration, Evaporation, Reverse Osmose, Elektrodialyse usw. Eine Integration von derartigen Abtrennungsprozessen in Bioprozessen wie Fermentationsverfahren hat sich bisher als besonders schwierig erwiesen.

Insbesondere die Gewinnung von Aminosäuren hat dabei in den letzten Jahren vor allem mit Blick auf die Lebensmittel- und Getränkeindustrie wirtschaftlich an Interesse zugenommen. Die Separation der gewünschten Aminosäuren aus Bioprozessgemischen erfolgt z. B. vor allem über Ionenaustauscher oder beispielsweise mittels Reaktivextraktion. Diese Verfahren stießen jedoch bis vor kurzem bei der Aufreinigung insbesondere von Kulturbrühen an ihre Grenzen. Nachteilig bei einer Behandlung von Kulturflüssigkeiten über Ionenaustauscher war z. B. das Erfordernis einer extensiven Vorbehandlung des zu reinigenden Gemisches.

Es ist außerdem bekannt, dass bei der fermentativen Produktion von L-Phenylalanin im Fed-Batch-Verfahren die Produktbildung ab einer L-Phenylalanin-Konzentration von ca. 30 g/L inhibiert wird. Um diese Inhibierung zu verhindern, ist es notwendig, das L-Phenylalanin während des Prozesses abzutrennen. Ein solches Verfahren kann als sogenannte *"in situ* Produktgewinnung" (auch als *"in situ* Product Recovery", oder "ISPR") angedeutet werden. Die Anwendung von ISPR ist z. B. beschrieben in Publikationen von M. Gerigk et al., Bioprocess Biosyst. Eng. 25 (2002) 43 - 52, und von D. Maass et al., Bioprocess Biosyst. Eng. (im Druck) .

In WO/66253 ist ein Verfahren zur integrierten reaktivextraktiven Abtrennung von in einem wässrigen Bioprozessgemisch vorhandenen stickstoffhaltigen organischen Substanzen beschrieben, wobei man bestimmte Extraktionsmittel, die zumindest teilweise längerkettige organische Verbindungen und wenigstens einen flüssigen Kationentauscher als Reaktivcarrier enthalten, einsetzt und wobei die Extraktion in Hohlfaserkontaktoren über wenigstens eine poröse Membran, die entweder von dem wässrigen Gemisch oder dem Extraktionsmittel benetzbar ist, geschieht. Die Funktion der Membran ist dabei, ein dispersionsfreies Extraktionsverfahren zu ermöglichen, so dass nur ein Stoffaustausch der stickstoffhaltigen organischen Substanzen mittels Diffusion (maximal im Rahmen der Löslichkeit der organischen Phase und des Carriers) über die Membran-stabilisierte Phasengrenzfläche stattfindet. Zugleich sollte dabei der Eintrag der organischen Phase in das wässrige Bioprozessgemisch prinzipiell vermieden werden, da dies zu einer Reduzierung der Aktivität des Biokatalysators (und/oder des Mikroorganismus) führen könnte. Beim Membranextraktionssystem findet also im Prinzip keine Vermischung der beiden Phasen (organische Extraktionsphase und wässriges Bioprozessgemisch) statt.

Bei der Wahl der Reaktivcarriersyteme gemäß WO/66253 werden trotzdem sehr hohe Erfordernisse an der Biokompatibilität der Komponenten gestellt. Verwendet wurde bevorzugt das biokompatible Stoffsystem mit Kerosin als Lösungsmittel und Di-2-ethylhexyl-Phosphorsäure (D2EHPA) als Extraktionsmittel (Carrier). Der Carrier D2EHPA wurde dabei in einer zweiten Extraktionsstufe mit Schwefelsäure als Extraktionsmittel regeneriert. Das L-Phenylalanin wurde in der Schwefelsäure aufkonzentriert. Dies beschränkt die Möglichkeiten der Systemwahl im allgemeinen auf Kombinationen von Kerosin und D2EHPA, bzw. mit Di-Nonyl-Naphthalen Sulfonsäure Estern (DNNSE).

Die Handhabung des membrangestützten Extraktionssystems hat sich aber in der Praxis, schon im Pilotmaßstab, als aufwendig erwiesen. Ein Scale-up bei Verwendung von Hohlfaserkontaktoren ist nur bedingt durchführbar, was z. B. durch die starke Druckabhängigkeit bedingt ist. Sobald Druckschwankungen auftreten, können die Phasen leicht instabil werden, was zu einem Phasendurchbruch führen kann und zur Bildung von Emulsionen, wobei der Prozess beendet werden muss. Da weiterhin die Porosität der Membranen stets die maximale Austauschfläche bestimmen, sind Stofftransport und Extraktionsleistung bei membrangestützter Reaktivextraktion ziemlich limitiert.

Aufgabe der vorliegenden Erfindung ist es daher, ein Verfahren zur integrierten Abtrennung aus einem Bioreaktor von einer oder mehreren in einem wässrigen Bioprozessgemisch vorhandenen organischen Substanzen, enthaltend zumindest eine positiv geladene stickstoffhaltige Gruppeoder zumindest eine positiv aufladbare stickstoffhaltige Gruppe in welchem Verfahren Reaktivextraktion, in wenigstens einem Schritt durchgeführt wird mit einem Extraktionsmittel, zur Verfügung zu stellen, das die oben genannten Nachteile nicht mehr aufweist.

Gelöst wird diese Aufgabe dadurch, dass
a. wässriges Bioprozessgemisch kontinuierlich aus dem Bioreaktor entnommen wird, und
b. mit einem Extraktionsmittel, das zumindest teilweise längerkettige organische Verbindungen und wenigstens einen flüssigen Kationen-tauscher enthält, in eine Flüssig-Flüssig-Zentrifuge geführt wird,
c. mittels des Extraktionsmittels extrahiert wird, wobei eine organische Phase bekommen wird, die die aus dem Bioprozessgemische zu extrahierende Substanz enthält, und
d. das enstandene wässrige Retentat in den Bioreaktor zurückgeführt wird.

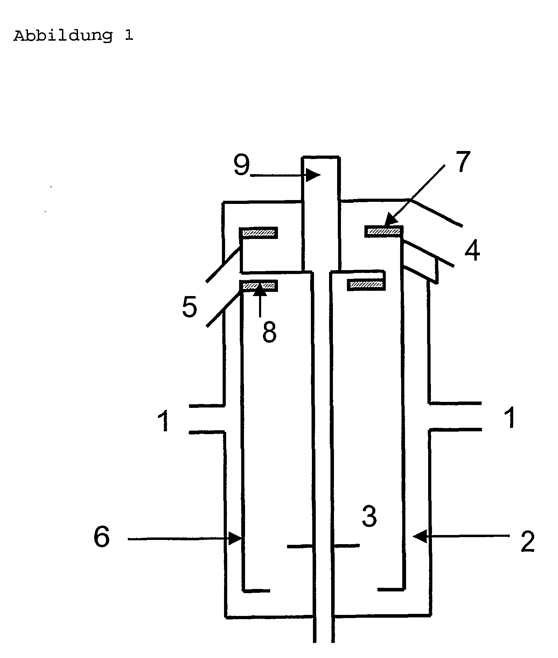

Abbildung 1 zeigt eine schematische Abbildung einer Flüssig-Flüssig-Zentrifuge. Leichte (organische) und schwere (wässrige) Phase werden separat in die Zentrifuge eingeführt und mit Hilfe eines Rotors intensiv in einem Mischbereich vermischt, wonach Trennung leichter und schwerer Phase in einem Trennbereich geschieht. Leichte und schwere Phase werden separat abgeführt, d.h. die schwere Phase fließt an der Rotorwand über die äußere Wehrscheibe (die eine vom System abhängige Größe hat) ab; die leichte Phase fließt innen über ein festes Wehr ab. Wehrscheiben, wie man sie in Flüssig-Flüssig-Zentrifugen verwenden kann, sind - im allgemeinen verstellbare oder in der Größe des zentralen Lochs wählbare - Metallscheiben, die ein Loch in der Mitte haben, über dessen Größe der Abfluss der schweren Phase geregelt werden kann.

In Abbildung 1 ist:
1 einerseits Zufuhr des Bioprozessgemisches, andererseits des Extraktionsmittels
2 Mischbereich bzw. Extraktionsbereich
3 Trennbereich
4 Abfuhr der schweren Phase über die äußere Wehrscheibe (7)
5 Abfuhr der leichten Phase über ein festes Wehr (8)
6 Rotationszylinder
7 die äußere Wehrscheibe
8 ein festes Wehr
9 Antriebswelle.

Die oben erwähnten Nachteile aus dem Stand der Technik werden bei der erfindungsgemäßen Ausführung des Verfahrens gemäss Anspruch 1 überwunden, wobei die Unteransprüche 2 bis 21 das Verfahren weiter verbessern. Es hat sich erwiesen, dass beim Verfahren gemäss der Erfindung sowohl eine wesentlich höhere Leistung (verbesserter Stofftransport) als auch eine verbesserte Handhabung des Prozesses erreicht wird. Außerdem hat sich gezeigt, dass auf limitiertem Ausmaß erzielte Ergebnisse einfach auf einen größeren, z. B. auf 300 L Ebene, Maßstab übertragbar sind. Bevorzugt werden aber nur die Lösungsmittel, die beim Schütteln mit wässriger Phase in einem Schüttelkolben keine starken Emulsionen formen, da sonst die Wirkung der Flüssig-Flüssig-Zentrifuge(n) beeinträchtigt würde.

Im Sinne dieser Erfindung wird mit "mindestens eine Flüssig-Flüssig-Zentrifuge" gemeint, dass man für die weitere Aufarbeitung des Bioprozessgemisches nicht notwendigerweise weitere Flüssig-Flüssig-Zentrifugen zu verwenden hat. So kann z. B. der erste Extraktionsschritt (die "Hinextraktion") in zwei (oder sogar mehrere) parallel geschalteten Flüssig-Flüssig-Zentrifugen ausgeführt werden. Dies kann kontinuierlich oder semikontinuierlich geschehen. Auch kann, wie später in dieser Beschreibung besprochen, die Rückextraktion mit einer oder mehreren Flüssig-Flüssig-Zentrifuge(n) ausgeführt werden. So könnte man eine zweite Flüssig-Flüssig-Zentrifuge (oder weitere Flüssig-Flüssig-Zentrifugen in parallel) nachschalten (zur Rückextraktion) so bald sich - nach bestimmter Zeit - in der ersten Flüssig-Flüssig-Zentrifuge eine gute Beladung der tion) so bald sich - nach bestimmter Zeit - in der ersten Flüssig-Flüssig-Zentrifuge eine gute Beladung der organischen Phase eingestellt hat. Die Rückextraktion kann aber auch mit anderen Techniken durchgeführt werden, z. B. membrangestützt wie in WO/66253.

Erfindungsgemäß werden, bei der Hinextraktion, Extraktionsgut (d.h. das Bioprozessgemisch, z. B. eine Fermentationsbrühe, bzw. das Extraktionsmittel, z. B. D2EHPA in Kerosin) in die Zentrifuge (siehe Abbildung 1) zugeführt (1). An der Außenseite des Rotors findet die Mischung der beiden Phasen, d.h. die Extraktion statt (2). Im Innenraum werden die Phasen im Zentrifugalfeld separiert (3) + (6). Die schwere Phase verlässt die Zentrifuge außen (4), die leichte Phase innen (5). Die optimale Trennung der beiden Phasen kann z. B. über die Größe der gewählten Wehrscheibe(n) (7) + (8) gewährleistet werden.

Auch durch eine Veränderung des Volumenstroms kann die verweilzeit in der Zentrifuge, d.h. die Kontaktzeit der Phasen, variiert werden. Außerdem wird durch Veränderung der Drehzahl die Phasengrenzfläche beeinflusst, wie auch die Stärke des Zentrifugalfeldes die Trennung der wässrigen und organischen Phasen verändern kann. Der erfindungsgemäße Prozess lässt sich durch Variation von Drehzahl und/oder Volumenströmen einfach regeln. Beide sind einfache Optimierungsparameter, die frei gewählt werden können.

Darüber hinaus können auch bauart-bedingte Veränderungen an den Zentrifugen, Rotoren usw. angebracht werden Shear" oder "High-Shear" Rotoren. Auch können, bauartbedingt, andere Separatoren, wie z. B. Tellerseparatoren, mit gegeneinander drehenden Tellern oder mit statischen Tellern, eingesetzt werden.

In einer bevorzugten Ausführungsform der Erfindung wird das zu der Flüssig-Flüssig-Zentrifuge aus Stufe b. geleitete Bioprozessgemisch zellfrei gemacht bevor es in diese Zentrifuge geleitet wird. In einer weiteren bevorzugten Ausführungsform der Erfindung wird das zu der Flüssig-Flüssig-Zentrifuge aus Stufe b. geleitete Bioprozessgemisch außerdem auch proteinfrei gemacht. Dabei entsteht eine zellfreie und biokatalysatorfreie Bioprozesslösung. Bevorzugt als wässriges Bioprozessgemisch ist ein Fermentationsgemisch. Die Fermentationen können, je nach Art der Reaktion, aerob oder anaerob ablaufen und als Batch-, semi-kontinuierlicher oder kontinuierlicher Prozess betrieben werden.

Das erfindungsgemäße Prinzip der Flüssig-Flüssig-Zentrifugation kann sowohl bei der Hinextraktion (aus dem im Bioreaktor vorhandenem Medium) als auch bei der Rückextraktion, wobei die zu gewinnenden Substanzen wieder in eine wässrige Phase aufgenommen werden, vorzugsweise in aufkonzentrierter Form, angewendet werden.

Insbesondere wird ein Verfahren verwendet, bei dem der Flüssig-Flüssig-Zentrifuge aus Stufe b. ein weiterer Extraktionsschritt nachgeschaltet ist, wo die extrahierte Substanz aus dem ersten Extraktionsschritt in eine wässrige Phase rückextrahiert wird. Es wird bevorzugt, dass der weitere Extraktionsschritt auch in einer Flüssig-Flüssig-Zentrifuge statt findet.

Bei der Rückextraktion in einer Flüssig-Flüssig-Zentrifuge werden die in der Hinextraktion beladene organische Phase (Extraktionsmittel, z. B. D2EHPA in Kerosin, mit darin aufgenommene extrahierten Substanzen) einerseits, und die, z. B. mit Schwefelsäure auf niedrigen pH gebrachte, wässrige Phase andererseits separat in eine Flüssig-Flüssig-Zentrifuge für die Zurückextraktion zugeführt. Zur Illustration sei hier wieder auf Abbildung 1 hingewiesen. Die Zufuhr der organischen Phase und der wässrigen Phase geschieht bei (1). An der Außenseite des Rotors findet wiederum die Vermischung von beiden Phasen, d.h. die Rückextraktion, statt (2). Auch bei der Rückextraktion werden die Phasen aufgrund der Zentrifugalkraft im Innenraum separiert (3) + (6), wonach die schwere Phase die Zentrifuge außen verlässt (4), und die leichte Phase innen (5). Die optimale Trennung der beiden Phasen wird auch bei der Rückextraktion z. B. über die Größe der gewählten Wehrscheibe(n), (7) + (8), gewährleistet. Die Rückextraktion kann - wie oben schon erwähnt - aber auch mit anderen Techniken durchgeführt werden.

Im erfindungsgemäßen Prozess entspricht die Extraktionsleistung in der Flüssig-Flüssig-Zentrifuge aus Stufe b. vorzugsweise wenigstens der Produktionsrate im Bioprozess. Mit Extraktionsleistung in einem Extraktionsschritt (oder sogar in einem ganzen Prozess, wenn man den totalen Prozess der integrierten Abtrennung als einen Extraktionsprozess andeutet) ist die extraktive Abtrennung einer Komponente pro Stunde in dem Extraktionsschritt (oder in dem ganzen Prozess) - aus dem Bioprozessgemisch - gemeint. Die insgesamt abgeführte Menge kann in Mol angegeben werden. Mit Produktionsrate wird die pro Stunde in dem Bioprozess biokatalytisch produzierte Menge jener Komponente (in Mol) verstanden, die in dem Extraktionsschritt (oder in dem ganzen Prozess) extraktiv aus dem Bioprozessgemisch abgeführt werden kann.

Als Extraktionsmittel zur integrierten Extraktion von organischen Substanzen, die zumindest eine positiv geladene stickstoffhaltige Gruppe oder zumindest eine positiv aufladbare stickstoffhaltige Gruppe enthalten, aus einem Bioprozessgemisch werden vorzugsweise die gleichen Extraktionsmittel eingesetzt wie in WO/66253. Das heißt, es wird zur Extraktion in der Flüssig-Flüssig-Zentrifuge aus Stufe b. bevorzugt ein Extraktionsmittel eingesetzt, das zumindest teilweise längerkettige organische Verbindungen und wenigstens einen flüssigen Kationentauscher enthält. Die zumindest teilweise längerkettigen organischen Verbindungen haben bei den erfindungsgemäßen Verfahren die Funktion eines Lösungsmittels. Der flüssige Kationentauscher hat die Funktion eines Carriers.

Als längerkettige organische Verbindungen werden vorzugsweise solche Verbindungen eingesetzt, die nur schwer mit Wasser mischbar oder nur schwer in Wasser lösbar sind und bei Temperaturen zwischen 10 und 60°C, vorzugsweise zwischen 20 und 40 °C flüssig sind.

Denkbar sind hier verzweigte, unverzweigte, gesättigte, ungesättigte oder teilweise aromatische organische Verbindungen. Beispiele für erfindungsgemäß verwendbare längerkettige organische Verbindungen sind Alkane, Alkene oder Fettsäureester oder Gemische aus mehreren dieser Verbindungen. Insbesondere werden dabei als längerkettige organischen Verbindungen Alkane, Alkene oder Fettsäureester mit 6 bis 20 C-Atomen, vorzugsweise mit 12 bis 18 C-Atomen eingesetzt.

Als Alkane sind beispielsweise Hexan, Cyclohexan, Decan, Ethyl-Decan, Dodecan oder Gemische davon einsetzbar. Besonders bevorzugt ist Kerosin. Als Alkene sind z. B. Hexen, Nonen, Decen, Dodecen oder Gemische davon einsetzbar. Als Fettsäureester sind insbesondere Alkylstearate mit Alkylgruppen mit mehr als 2 C-Atomen einsetzbar. Beispiele für Fettsäureester sind Ethylstearat, Butylstearat, Isopropylstearat, Ethyl-Palmitat oder Butyl-Linoleat. Besonders bevorzugt ist der Einsatz von Kerosin oder Butylstearat. Zwei oder mehr der genannten organischen Verbindungen können auch in Form von Gemischen zum Einsatz kommen.

Als flüssigen Kationentauscher werden insbesondere Ester aus anorganischen Säuren und organischen Resten, die vorzugsweise verzweigt sind, eingesetzt. Zu den anorganischen Säuren zählen vorzugsweise Phosphorsäure, phosphorige Säure, Schwefelsäure und schweflige Säure. Mehr spezifisch werden als flüssiger Kationentauscher bevorzugt Ester aus Phosphorsäure, phosphoriger Säure, Schwefelsäure oder schwefliger Säure eingesetzt. Ganz besonders bevorzugt sind Ester aus Phosphorsäure. Die erfindungsgemäß verwendeten organischen Reste sind vorzugsweise verzweigte und/oder unverzweigte Alkyl- oder Alkenyl-Gruppen mit wenigstens 4 C-Atomen, vorzugsweise 4 bis 20 C-Atomen. Zu den bevorzugten flüssigen Kationentauschern zählen Di-2-Ethyl-Hexyl-PhosphorsäureEster, Mono-2-Ethyl-Hexyl-Phosphorsäure-Ester, Di-Nonyl-Naphthalen-Sulfonsäure-Ester oder Gemische hiervon. Am meisten bevorzugt als flüssigen Kationentauscher sind Di-2-Ethyl-Hexyl-Phosphorsäure-Ester, Mono-2-Ethyl-Hexyl-Phosphorsäure-Ester, Di-Nonyl-Naphthalen-Sulfonsäure-Ester oder Gemische hiervon. Erfindungsgemäß am meisten bevorzugt ist das Gemisch aus Di-2-Ethyl-Hexyl-Phosphorsäure-Ester und Mono-2-Ethyl-Hexyl-Phosphorsäure-Ester.

In der Flüssig-Flüssig-Zentrifuge aus Stufe b. beträgt die Menge an flüssigem Kationentauscher, bezogen auf die Menge an längerkettigen organischen Verbindungen im allgemeinen 2 bis 25 Gew.%, vorzugsweise 5 bis 20 Gew.%, besonders bevorzugt 8 bis 15 Gew.%.

Zu den extrahierbaren Substanzen zählen beispielsweise L-Aminosäuren, aber auch D-Aminosäuren können erfindungsgemäß in einem integrierten Verfahren abgetrennt werden. Grundsätzlich sind sowohl natürliche als auch nicht natürliche Aminosäuren extrahierbar. Denkbar sind alle D- und L-Formen essentieller Aminosäuren. Beispiele für extrahierbare Aminosäuren sind L-Phenylalanin, D-Phenylalanin, L-Tryptophan, D-Tryptophan, L-Tyrosin, D-Tyrosin, D-p-Hydroxy-Phenylglycin, D-Phenylglycin, Di-Hydroxy-Phenylalanin. Auch können aromatische β-Aminosäuren abgetrennt werden, wie z. B. β-Phenylalanin oder β-Tyrosin. Weiterhin sind mit dem erfindungsgemäßen Verfahren Lactame extrahierbar. Hierzu zählen u. a. auch β-Lactame, z. B. Caprolactam.

Ferner können erfindungsgemäß auch Peptide, insbesondere aber Di- oder Oligopeptide extrahiert werden. Hierzu zählt beispielsweise L-Aspartyl-L-Phenylalanin als Vorläufermolekül für die Herstellung von Aspartam. Extrahierbar sind auch Aminoalkohole, z. B. 1S, 2R-cis-(-)-Aminoindanol, und (Amino)Cyclitolen. Die erfindungsgemäße Extraktion ist außerdem anwendbar für die Gewinnung von Aminen oder Amiden.

Das Bioprozessgemisch enthält vorzugsweise organische Substanzen ausgewählt aus der Gruppe aliphatischer und/oder aromatischer Aminosäuren und/oder Lactame, deren Salze, Derivate oder Di- oder Oligopeptide oder Gemische dieser Verbindungen, welche erfindungsgemäß aus dem Bioprozessgemisch extrahiert werden.

Das Extraktionsmittel kann erfindungsgemäß neben den genannten Verbindungen auch weitere Substanzen enthalten. Hierzu zählen auch nach dem Stand der Technik bekannte Extraktionsmittel.

Das erfindungsgemäße Verfahren zur integrierten Abtrennung aus einem Bioreaktor von einer oder mehreren in einem wässrigen Bioprozessgemisch vorhandenen organischen Substanzen enthaltend zumindest eine positiv geladene stickstoffhaltige Gruppe oder zumindest eine positiv aufladbare stickstoffhaltige Gruppe in welchem Verfahren Reaktivextraktion in wenigstens einem Schritt duchgeführt wird mit einem Extraktionsmittel, wird vorzugsweise kontinuierlich betrieben. In dieser bevorzugten kontinuierlichen Ausführungsform wird
(a) wässriges Bioprozessgemisch kontinuierlich aus dem Bioreaktor entnommen, und
(b) mit einem Extraktionsmittel das zumindest teilweise längerkettige organische Verbindungen und wenigstens einen flüssigen Kationentauscher enthält, in eine Flüssig-Flüssig-Zentrifuge geführt, und
(c) dort mittels des Extraktionsmittels extrahiert, wobei eine organische Phase bekommen wird, die die aus dem Bioprozessgemisch zu extrahierende Substanz enthält, und
(d) das entstandene wässrige Retentat in den Bioreaktor zurückgeführt.

In Schritt (a) kann statt des wässrigen Bioprozessgemisches selbstverständlich auch jedes andere in einem (Bio)-Reaktor entstehende Reaktionsgemisch verwendet werden, in dem organische Substanzen mit zumindest einer positiv geladenen stickstoffhaltige Gruppe oder zumindest einer positiv aufladbaren stickstoffhaltigen Gruppe enthalten sind. Beispiele solcher Substanzen sind oben bereits angedeutet.

Ein sehr bevorzugtes Einsatzgebiet des erfindungsgemäßen Verfahrens ist die Extraktion aus Fermentationslösungen, Abwässern und/oder wässrigen Gemischen chemischer Synthese- und/oder Degradationsprozesse. Insbesondere lässt sich das erfindungsgemäße Verfahren in Fermentationsprozesse integrieren. Die Fermentationsprozesse können aerob oder anaerob ablaufen und als batch-, semi-kontinuierliche oder kontinuierliche Prozesse betrieben werden.

Die organischen Substanzen werden dabei erfindungsgemäß bevorzugt aus dem Extraktionsmittel in eine wässrige Phase rückextrahiert. Insbesondere wird dazu, in einem weiteren Verfahrensschritt (e) die organische Phase aus (c) in einem geschlossenen Kreislauf mit einer wässrigen Akzeptorphase in Kontakt gebracht und rückextrahiert.

Als wässrige Akzeptorphase kommen generell zur Entladung der Carrier alle geeigneten Protonendonatoren in Frage, z. B. H⁺ aus Schwefelsäure. In Schritt (e) kann statt Schwefelsäure selbstverständlich auch jede andere starke Säure verwendet werden. Beispiele sind ferner Ammoniumsulphat, Salzsäure und Phosphorsäure.

Bevorzugt findet der Kontakt mit der wässrigen Akzeptorphase aus e. in einer Flüssig-Flüssig-Zentrifuge statt, und wird die dabei erhaltene abgereicherte organische Phase kontinuierlich oder semikontinuierlich in die Zentrifuge aus Schritt (b) zurückgeführt.
Mit noch mehr Vorzug wird das wässrige Bioprozessgemisch in Stufe (a) in einem weiteren Schritt [a1] über einen Bypass mit Ultrafiltrationsmodul (Trennwert ungefähr 500 kDa) unter Rückführung des Zellmaterials in den Bioreaktor, zellfrei gemacht und wird ein zellfreies Permeat erhalten, das zu Schritt (b) geführt wird.

In einem weiteren bevorzugten Vorgang [a2] wird das zellfreie Permeat über eine Membrankassette im Nano-Bereich (Trennwert ungefähr 10 kDa bis 50 kDa), proteinfrei gemacht, unter Rückführung des proteinhaltigen Teils des zellfreien Permeats in den Bioreaktor, wobei das erhaltene zellfreie und proteinfreie Permeat mit dem Extraktionsmittel zu Schritt (b) in die erste Flüssig-Flüssig-Zentrifuge geführt wird.

Die besten Ausbeuten des erfindungsgemäßen Prozesses werden bekommen, wenn man in den Stufen (d) und (e) eine vollständige Rückführung des wässrigen Retentats in den Bioreaktor durchführt. Insgesamt findet dann eine vollständige Rückführung des wässrigen Retentats in den Bioreaktor statt.

Es ist ein besonderer Vorteil des erfindungsgemäßen Verfahrens, dass die Rückextraktion unter gleichzeitiger Aufkonzentrierung der organischen Substanzen erfolgt. Am meisten bevorzugt erfolgt das erfindungsgemäße Verfahren kontinuierlich und simultan zu einer in dem Bioreaktor ablaufenden Reaktion, wobei die Extraktionsleistung des gesamten Prozesses mindestens der Produktionsrate im Bioreaktor gleicht. Es wird vorzugsweise aus Fermentationslösungen extrahiert.

Das erfindungsgemäße Verfahren für eine integrierte Abtrennung von Substanzen aus einem Bioprozessgemisch kann aber im Prinzip auch verwendet werden für eine integrierte Abtrennung von Substanzen aus anderen Prozessen als biokatalytischen Prozessen. In dem Fall spricht man, statt vom Bioreaktor (oder Fermentationsreaktor, oder Fermenter), besser von einem Behälter, in dem eine Reaktion abläuft, aus der man kontinuierlich eine Substanz abtrennen möchte. Im allgemeinen wird ein derartiger Behälter jedoch meistens als Bioreaktor bezeichnet werden.

Gegenüber der Arbeit mit Hohlfaserkontaktoren sind Handhabung und Scale-up bei Verwendung von Flüssig-Flüssig-Zentrifugen vereinfacht. Nach dem Anfahren läuft das System stabil, selbst wenn zeitweise keine Zufuhr von leichter oder schwerer Phase stattfindet. Phaseninstabilität aufgrund von Druckunterschieden ist somit kein Problem. Die Phasengrenzfläche und damit der Stofftransfer sind in diesem System ebenfalls erhöht.

Eine solche integrierte Verwendung von Flüssig-Flüssig-Zentrifugen in einem Fermentationsprozess während der Fermentation ist neu. Flüssig-Flüssig-Zentrifugen sind zwar schon seit langem bekannt und kommerziell zu kaufen, z. B. bei der CINC Deutschland GmbH, Brakel, Deutschland. CINC Deutschland ist eine Tochtergesellschaft von Costner Industries Nevada Corporation, USA.

Es sei bemerkt, dass Likidis und Schügerl (Biotech. & Bioeng., Vol.30, Seite 1032-1040, 1987; DE-A-3729338) Flüssig-Flüssig-Zentrifugen zwar mit Erfolg eingesetzt haben, bei der Aufarbeitung von Bioprozessgemischen nach Beendung der Fermentation, insbesondere zur Gewinnung von Penizillin, doch wurden dabei immer toxische Extraktionsmittel eingesetzt und die verwendeten Biokatalysatoren kamen nie in Kontakt mit den bei der Extraktion verwendeten Extraktionsmitteln. Außerdem wurden die von Likidis und Schügerl extrahierten Substanzen immer durch Reaktion mit einer Carboxylgruppe aus dem Medium abgetrennt. Es gibt in genannten Publikationen keinen Hinweis, dass man Flüssig-Flüssig-Zentrifugen auch in einer integrierten Verfahrensweise bei Fermentationsprozessen verwenden könnte. Extraktionen über verschiedene flüssige Membranen (Flüssig-Emulsion-Membrane) sind bei Thien, M.P., et al. (Biotechnol Bioeng. 1998, 32: 604-615) beschrieben, können jedoch nicht unter Bedingungen mit hohem "shear-stress"; wie bei Verwendung von Zentrifugen, eingesetzt werden.

Es hat sich überraschenderweise herausgestellt, dass beim erfindungsgemäßen Verfahren zur in Fermentationsprozessen integrierten Reaktivextraktion unter Verwendung mindestens einer Flüssig-Flüssig-Zentrifuge, sehr hohe Ausbeuten an extrahierten Substanzen möglich sind. So hat es sich als möglich erwiesen in der Akzeptorphase L-Phenylalanin in Konzentrationen im Bereich von bis zu ungefähr 80 g/l zu gewinnen, und wahrscheinlich werden sogar noch höhere Konzentrationen ermöglicht.

Im Prinzip ermöglicht die jetzige Erfindung also auch das Arbeiten mit geringeren Mengen an Carrier als zuvor im Stand der Technik üblich war.

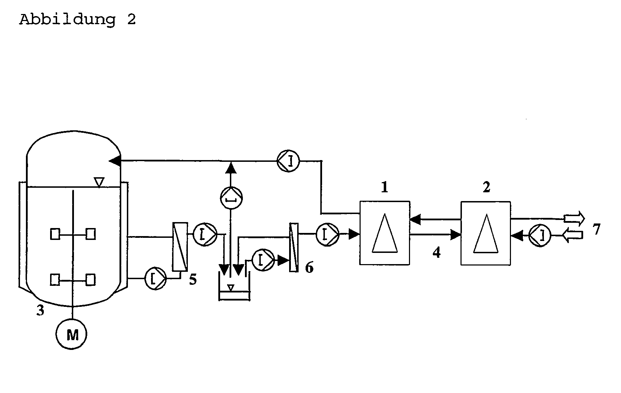

Im folgenden wird mit Hilfe der Abbildung 2 die Anwendung des erfindungsgemäßen Verfahrens anhand eines integrierten Fermentationsprozesses, z. B. zur Produktion von L-Phenylalanin, näher erläutert:
Abbildung 2 zeigt einen Bioreaktor (3) in dem eine fermentative Produktion von L-Phenylalanin erfolgt. An diesen Bioreaktor (Fermenter) ist ein Bypass mit Ultrafiltrationsmodul (UF I; 500 kDa) angeschlossen (5), durch den die Fermentationsbrühe während des Prozesses gepumpt wird, um zellfreies Permeat zu gewinnen. Das zellfreie Permeat wird dabei in ein Vorratsgefäß gepumpt. Von dort wird das zellfreie Permeat im Kreis durch eine zweite Ultrafiltrationseinheit (UF II; 10 kDa) gefördert (6), um die im Permeat anwesenden Proteine abzutrennen. Das so erhaltene zell- und proteinfreie Permeat wird in eine erste Flüssig-Flüssig-Zentrifuge (1) gepumpt zur Extraktion des L-Phenylalanins mit dem Extraktionsmittel, z. B. D2EHPA in Kerosin. Nach Extraktion und Phasentrennung wird das Raffinat in den Fermenter zurückgeführt. Die organische Phase (z. B. D2EHPA in Kerosin) wird im Kreis geführt (4), und in der zweiten Flüssig-Flüssig-Zentrifuge (2) findet die Rückextraktion mit z. B. Schwefelsäure statt. Das L-Phenylalanin wird dabei in der wässrigen Phase aufkonzentriert. Extraktionsmittel und/oder Protonendonator können über (7) zugeführt werden (bzw. wird das beladene Extraktionsmittel mit aufkonzentrierter extrahierten Substanz zur Gewinnung der Substanz abgeführt).
In Abbildung 2 ist, anders formuliert:
   1 eine erste Flüssig-Flüssig-Zentrifuge mit Zufuhr des zell- und proteinfreien Bioprozessgemisches, und des Extraktionsmittels, bzw. Abfuhr des abgereicherten Bioprozessgemisches, und des beladenen Extraktionsmittels,
   2 eine zweite Flüssig-Flüssig-Zentrifuge mit Zufuhr des beladenen Extraktionsmittels und Dosierung vom Protonendonator aus (7), bzw. Abfuhr des weiter zu beladenden Extraktionsmittels zu (1), bzw. des beladenen Extraktionsmittels zur Gewinnung von der aufkonzentrierten Substanz,
   3 Bioreaktor,
   4 Kreislauf der organischen Phase,
   5 Ultrafiltrationsmodul (UF I; Trennwert ungefähr 500 kDa),
   6 Ultrafiltrationseinheit (UF II; 10 kDa; Nano-Bereich, Trennwert ungefähr 10 kDa),
   7 Zu- und Abfuhr Extraktionsmittel und/oder Protonendonator,
   M Antrieb.

Die Erfindung wird jetzt anhand eines Beispiels und einiger Vergleichsbeispiele näher erläutert.

Im vorliegenden Beispiel wurde dabei in einer Aufstellung gemäss Abbildung 2, mit einem Bioreaktor mit 10 L Fermentationsvolumen (batch), und einem Bypass-Volumen von ungefähr 1.2 L gearbeitet. Ultrafiltrationsmodul I (Schleicher und Schüll GmbH, Dassel, Deutschland; ein Hohlfaserfiltrationsmodul) hatte einen Trennwert von 500 kDa. Ultrafiltrationsmodul II (ebenfalls Schleicher und Schüll GmbH, Dassel, Deutschland) hatte einen Trennwert von 10 kDa, und bestand aus fünf Kassettenmodulen. Als Extraktionsmittel für die Hinextraktion wurde D2EHPA (Merck) in Kerosin (Fluka) verwendet.

### Beispiel I (fermentative L-Phenylalaninbereitung)

In dem Bioreaktor (Fermenter) wurde eine Fermentation mit integrierter Extraktion durchgeführt. Die Fermentation wurde im Batch-Verfahren gestartet. Während der Wachstumsphase der Zellen (eines L-Phenylalanin produzierenden tyrosinauxotrophen *E*. *coli* Stammes) wurde, nach ca. 6 Stunden, die Produktion induziert und der Ammoniak-, Glucose- und Tyrosin-Feed gestartet. Die Wachstumsphase wurde nach insgesamt ca. 14 Stunden durch Tyrosinlimitierung der *E*. *coli* beendet. Nach insgesamt ungefähr 22 Stunden waren im Medium etwa 15 g/L L-Phenylalanin, das heisst eine signifikante L-Phenylalaninkonzentration, vorhanden bei guter Bildungsrate. Zu diesem Zeitpunkt wurde der Prozess zur Gewinnung von zell- und proteinfreiem Permeat und anschließend die Extraktion gestartet.

Die für den Fed-Batch-Fermentationsprozess und die integrierte Reaktivextraktion verwendeten Extraktionsparameter der Flüssig-Flüssig-Zentrifugen waren wie folgt:
Erste Flüssig-Flüssig-Zentrifuge:
   - Schwere Phase: Fermentationsbrühe mit L-Phenylalanin, volumenstrom: 2.4 L/h
   - Leichte Phase: 10 %-ige Lösung von D2EHPA in Kerosin, Volumenstrom: 3.36 L/h
Zweite Flüssig-Flüssig-Zentrifuge
   - Schwere Phase: 1 M Schwefelsäure, Volumenstrom: 1.5 L/h
   - Leichte Phase: 10 %-ige Lösung von D2EHPA in Kerosin, Volumenstrom: 3.36 L/h

Die Extraktion erfolgte für ca. 18 Stunden, d.h. bis Prozessstunde 40, wo der Prozess abgebrochen wurde. Das Extraktionssystem erwies sich bei Zufuhr von proteinfreiem Medium stabil. Ein negativer Effekt der Extraktion, beispielsweise durch den Eintrag von Kerosin oder D2EHPA, auf den Fermentationsprozess konnte nicht festgestellt werden.

Die L-Phenylalanin-Konzentration im Bioreaktor nahm in diesem Beispiel I zu bis die Reaktivextraktion gestartet wurde, und blieb weiter während der integrierten Extraktion bei ungefähr 12-15 g/L konstant. Die L-Phenylalanin-Konzentration am Ausgang der ersten Zentrifuge nach der Extraktion lag stets bei ungefähr 7 g/L. Der L-Phenylalaningehalt in der Schwefelsäure stieg zwischen Stunde 22 und 40 fast linear von Null bis auf ungefähr 59 g/L an, das heißt nach 18 Stunden Extraktionsdauer. Eine starke Aufkonzentrierung der L-Phenylalanin-Konzentration konnte also erreicht werden.

Die in diesem Beispiel theoretisch erreichte L-Phenylalanin-Konzentration kann berechnet werden, in dem man die L-Phenylalanin-Konzentrationen im Bioreaktor und in der wässrigen Schwefelsäure, bezogen auf das tatsächliche Fermentationsvolumen, addiert. Damit wäre in diesem Beispiel eine theoretische Endkonzentration an L-Phenylalanin von 52 g/L erreicht.

### Vergleichsbeispiel A

Bei einer vergleichsweise wie in Beispiel I durchgeführten Fermentation mit im übrigem gleichen Fermentationsbedingungen (Menge und Aktivität der *E*. *coli* Zellen, usw.), aber ohne integrierte Extraktion, das heißt es wurde nur ein Bioreaktor und keine Extraktionsapparatur verwendet, lag die theoretische Endkonzentration an L-Phenylalanin bei 31 g/L.

### Vergleichsbeispiel B

Bei einer weiteren vergleichsweise durchgeführten Fermentation mit im übrigem gleichen Fermentationsbedingungen (Menge und Aktivität der *E*. *coli* Zellen, usw.), aber mit integrierter Extraktion über Hohlfaserkontaktoren mit Membranen gemäss WO/66253 lag die theoretische Endkonzentration an L-Phenylalanin bei ungefähr 30 g/L.

Beim erfindungsgemäßen integrierten Verfahren mit Flüssig-Flüssig-Zentrifugen, konnte also eine weitaus höhere Endkonzentration an L-Phenylalanin erreicht werden als in den Vergleichsbeispielen.

Beim erfindungsgemäßen integrierten Verfahren mit Flüssig-Flüssig-Zentrifugen hat es sich außerdem als möglich erwiesen, die L-Phenylalanin-Produktion über einen längeren Zeitraum, von mindestens 50 Stunden Fermentationsdauer aufrecht zu erhalten, ohne dass im Bioreaktor eine Inhibierung auftritt.

Die Produktbildungsrate an L-Phenylalanin liegt bis zum Ende der 50-Stundenperiode klar oberhalb 0.03 g/(g*h). Dagegen sinkt die vergleichbare Produktbildungsrate bei einer Standardfermentation ohne integrierte Abtrennung von L-Phenylalanin über Flüssig-Flüssig-Zentrifugen bis auf Null bei einer Prozessdauer von 36 Stunden, und bei einer Standardfermentation mit integrierter Abtrennung von L-Phenylalanin über membrangestützte Extraktion gemäss WO/66253 bis auf 0.02 g/(g*h) bei einer Prozessdauer von 36 Stunden.

In Beispiel I gemäß dem erfindungsgemäßen Prozess der integrierten Produktabtrennung über Flüssig-Flüssig-Zentrifugen stieg die Produkt-Bildungsrate mit der Fermentationsdauer an und erreichte ein Maximum kurz nach dem Start der Extraktion des L-Phenylalanins. Ungefähr gleichzeitig erreichte auch die Extraktionsrate ein Maximum. Die Extraktionsrate blieb im weiteren Verlauf bis zur Abschaltung der Extraktion auf einem Niveau zwischen 1,1 g/(L*h) und 1,7 g/(L*h). Die volumetrische Produktbildung verhielt sich vergleichbar und nahm nach Abschaltung der Fermentation nur leicht ab. Durch die annähernd gleich großen Produktions- und Extraktionsraten wurde eine starke L-Phenylalanin-Akkumulation im Bioreaktor überraschenderweise weitgehend unterdrückt. Im wesentlichen blieb die Konzentration an L-Phenylalanin im Bioreaktor im Bereich von 12 bis 15 g/L konstant.

Die integrale Produkt-Substrat-Ausbeute in Beispiel I wurde berechnet als 24 % am Ende der Fermentation. Das heißt, es wurde eine Verbesserung um 6,5 % gefunden im Vergleich zu einer Fermentation ohne Reaktivextraktion mit Flüssig-Flüssig-Zentrifugen (mit einer Ausbeute von 17,5 %). Bei membrangestützter Reaktivextraktion wurde dahingegen nur eine Verbesserung um 5 % gefunden im Vergleich zu einer Fermentation ohne membrangestützte Reaktivextraktion mit einer Ausbeute von 15,3 %.

## Patentansprüche

1. Verfahren zur integrierten Abtrennung aus einem Bioreaktor von einer oder mehreren in einem wässrigen Bioprozessgemisch vorhandenen organischen Substanzen enthaltend zumindest eine positiv geladene stickstoffhaltige Gruppe oder zumindest eine positiv aufladbare stickstoffhaltige Gruppe in welchem Verfahren Reaktivextraktion in wenigstens einem Schritt durchgeführt wird mit einem Extraktionsmittel, wobei
a. wässriges Bioprozessgemisch kontinuierlich aus dem Bioreaktor entnommen wird, und
b. mit einem Extraktionsmittel, das zumindest teilweise längerkettige organische Verbindungen und wenigstens einen flüssigen Kationentauscher enthält, in eine Flüssig-Flüssig-Zentrifuge geführt wird,
c. mittels des Extraktionsmittels extrahiert wird, wobei eine organische Phase bekommen wird, die die aus dem Bioprozessgemisch zu extrahierende Substanz enthält, und
d. das entstandene wässrige Retentat in den Bioreaktor zurückgeführt wird.

2. Verfahren nach Anspruch 1
in dem
das zu der Flüssig-Flüssig-Zentrifuge aus Stufe b. geleitete Bioprozessgemisch zellfrei gemacht wird bevor es in die Zentrifuge geleitet wird.

3. Verfahren nach Anspruch 2
in dem
das zu der Flüssig-Flüssig-Zentrifuge aus Stufe b. geleitete Bioprozessgemisch außerdem auch proteinfrei gemacht wird.

4. Verfahren nach einem der Ansprüche 1 bis 3
in dem
das wässrige Bioprozessgemisch ein Fermentationsgemisch ist.

5. Verfahren nach einem der Ansprüche 1 bis 4
in dem
der Flüssig-Flüssig-Zentrifuge aus Stufe b. ein weiterer Extraktionsschritt nachgeschaltet ist, in dem die extrahierte Substanz aus dem ersten Extraktionsschritt in eine wässrige Phase rückextrahiert wird.

6. Verfahren nach Anspruch 5
in dem
der weitere Extraktionsschritt auch in einer Flüssig-Flüssig-Zentrifuge stattfindet.

7. Verfahren nach einem der Ansprüche 1 bis 6
in dem
die Extraktionsleistung in der Flüssig-Flüssig-Zentrifuge aus Stufe b. wenigstens der Produktionsrate im Bioprozess entspricht.

8. Verfahren nach einem der Ansprüche 1 bis 7
in dem
in Stufe b. längerkettige organischen Verbindungen Alkane, Alkene oder Fettsäureester mit 6 bis 20 C-Atomen, vorzugsweise mit 12 bis 18 C-Atomen eingesetzt werden.

9. Verfahren nach Anspruch 8
in dem
es in der Flüssig-Flüssig-Zentrifuge in Stufe b. als flüssigen Kationentauscher Ester aus anorganischen Säuren und organischen Resten, die vorzugsweise verzweigt sind, enthält.

10. Verfahren nach Anspruch 9
in dem
als flüssiger Kationentauscher Ester aus Phosphorsäure, phosphoriger Säure, Schwefelsäure oder schwefliger Säure eingesetzt werden.

11. Verfahren nach einem der Ansprüche 9 bis 10
in dem
es in der Flüssig-Flüssig-Zentrifuge aus Stufe b. als flüssigen Kationentauscher Di-2-Ethyl-Hexyl-Phos-phorsäure-Ester, Mono-2-Ethyl-Hexyl-Phosphorsäure-Ester, Di-Nonyl-Naphthalen-Sulfonsäure-Ester oder Gemische hiervon enthält.

12. Verfahren nach einem der Ansprüche 9 bis 11
in dem
es in der Flüssig-Flüssig-Zentrifuge aus Stufe b., bezogen auf die Menge an längerkettigen organischen Verbindungen 2 bis 25 Gew.%, vorzugsweise 5 bis 20 Gew.%, besonders bevorzugt 8 bis 15 Gew.% flüssigen Kationentauscher enthält.

13. Verfahren nach einem der Ansprüche 1 bis 12
in dem
organische Substanzen ausgewählt aus der Gruppe aliphatischer und/oder aromatischer Aminosäuren und/oder Lactame, deren Salze, Derivate oder Di- oder Oligopeptide oder Gemische dieser Verbindungen extrahiert werden.

14. Verfahren nach einem der Ansprüche 1 bis 13
in dem
in einem weiteren Verfahrensschritt
e. die organische Phase aus c. in einem geschlossenen Kreislauf mit einer wässrigen Akzeptorphase in Kontakt gebracht und rückextrahiert wird.

15. Verfahren nach Anspruch 14
in dem
der Kontakt mit der wässrigen Akzeptorphase aus e. in einer Flüssig-Flüssig-Zentrifuge geschieht, und in dem die dabei erhaltene abgereicherte organische Phase kontinuierlich oder semi-kontinuierlich in die Zentrifuge aus Schritt b. zurückgeführt wird.

16. Verfahren nach einem der Ansprüche 1 bis 15
in dem
das wässrige Bioprozessgemisch in Stufe a. in einem weiteren Schritt
a1) über einen Bypass mit Ultrafiltrationsmodul (Trennwert ungefähr 500 kDa) unter Rückführung des Zellmaterials in den Bioreaktor zellfrei gemacht wird und ein zellfreies Permeat erhalten wird, das zu Schritt b. geführt wird.

17. Verfahren nach Anspruch 16
in dem
das zellfreie Permeat in einem weiteren Vorgang
a2) über eine Membrankassette im Nano-Bereich (Trennwert ungefähr 10 kDa bis 50 kDa) proteinfrei gemacht wird, unter Rückführung des proteinhaltigen Teils des zellfreien Permeats in den Bioreaktor, wobei das erhaltene zellfreie und proteinfreie Permeat mit dem Extraktionsmittel zu Schritt b. in die erste Flüssig-Flüssig-Zentrifuge geführt wird.

18. Verfahren nach einem der Ansprüche 1 bis 17
in dem
in den Stufen (d). und (e). eine vollständige Rückführung des wässrigen Retentats in den Bioreaktor durchgeführt wird.

19. Verfahren nach einem der Ansprüche 1 bis 18,
in dem
die Rückextraktion unter gleichzeitiger Aufkonzentrierung der organischen Substanzen erfolgt.

20. Verfahren nach einem der Ansprüche 1 bis 19
in dem
die Extraktion kontinuierlich und simultan zu einer in dem Bioreaktor ablaufenden Reaktion erfolgt, wobei die Extraktionsleistung mindestens der Produktionsrate im Bioreaktor gleicht.

21. Verfahren nach einem der Ansprüche 1 bis 20
in dem
aus Fermentationslösungen extrahiert wird.

## Claims

1. Process for integrated removal from a bioreactor of one or more organic substances present in an aqueous bioprocess mixture, which comprise at least one positively charged nitrogen-containing group or at least one positively chargeable nitrogen-containing group, in which process reactive extraction is carried out in at least one step with an extractant wherein
a. an aqueous bioprocess mixture is continuously removed from the bioreactor, and
b. led with an extractant which comprises at least partially longer-chain organic compounds and at least one liquid cation exchanger into a liquid-liquid centrifuge,
c. extracted by means of said extractant, with an organic phase being obtained which contains the substance to be extracted from the bioprocess mixture, and
d. the resultant aqueous retentate is recycled into the bioreactor.

2. Process according to Claim 1,
in which
the bioprocess mixture directed to the liquid-liquid centrifuge of stage b. is rendered cell-free, before being directed into said first centrifuge.

3. Process according to Claim 2,
in which
the bioprocess mixture directed to the liquid-liquid centrifuge of stage b. is additionally also rendered protein-free.

4. Process according to any of Claims 1 to 3,
in which
the aqueous bioprocess mixture is a fermentation mixture.

5. Process according to any of Claims 1 to 4,
in which
a further extraction step downstream of the liquid-liquid centrifuge of stage b. comprises reverse-extracting the extracted substance from the first extraction step into an aqueous phase.

6. Process according to Claim 5,
in which
the further extraction step is also carried out in a liquid-liquid centrifuge.

7. Process according to any of Claims 1 to 6,
in which
the extraction performance in the liquid-liquid centrifuge of stage b. corresponds at least to the rate of production in the bioprocess.

8. Process according to any of Claims 1 to 7
in which
in stage b. longer-chain organic compounds used are alkanes, alkenes or fatty esters having from 6 to 20 carbon atoms, preferably having from 12 to 18 carbon atoms.

9. Process according to Claim 8,
in which
the liquid cation exchanger contained in the liquid-liquid centrifuge in stage b. is an ester of inorganic acids and organic radicals which are preferably branched.

10. Process according to Claim 9
in which
as liquid cation exchanger, esters of phosphoric acid, phosphorous acid, sulphuric acid or sulphurous acid are used.

11. Process according to any of Claims 9 to 10,
in which
the liquid cation exchanger contained in the liquid-liquid centrifuge of stage b. is di(2-ethylhexyl)phosphate, mono (2-ethylhexyl) phosphate, dinonyl naphthalene sulphonate or mixtures thereof.

12. Process according to any of Claims 9 to 11,
in which
the liquid-liquid centriguge of stage b. contains from 2 to 25% by weight, preferably from 5 to 20% by weight, particularly preferably from 8 to 15% by weight, of liquid cation exchanger, based on the amount of longer-chain organic compounds.

13. Process according to any of Claims 1 to 12,
in which
organic substances selected from the group consisting of aliphatic and/or aromatic amino acids and/or lactams, salts, derivatives or di- or oligopeptides thereof or mixtures of these compounds are extracted.

14. The process as claimed any of Claims 1 to 13,
in which
in a further process step
e. the organic phase of c. is contacted with an aqueous acceptor phase and reverse-extracted in a closed circulation.

15. Process according to claim 14,
in which
contact with the aqueous acceptor phase of e. takes place in a liquid-liquid centrifuge, and in which the diluted organic phase resulting therefrom is recycled continuously or semicontinuously into the centrifuge of step b.

16. Process according to any of Claims 1 to 15,
in which
the aqueous bioprocess mixture in stage a. is, in a further step
a1) rendered cell-free via a bypass with ultrafiltration module (cut-off at approximately 500 kDa), with the cell material being recycled into the bioreactor, and a cell-free permeate is obtained which is led to step b.

17. Process according to Claim 16
in which
the cell-free permeate, in a further process
a2) is rendered protein-free via a membrane cassette in the nano range (cut-off at approximately 10 kDa to 50 kDa), with the protein-containing portion of the cell-free permeate being recycled into the bioreactor, the cell-free and protein-free permeate obtained being led, with the extractant, to step b. into the first liquid-liquid centrifuge.

18. Process according to any of Claims 1 to 17,
in which
in stages (d). and (e). the aqueous retentate is completely recycled into the bioreactor.

19. Process according to any of Claims 1 to 18,
in which
reverse extraction is carried out with simultaneous concentration of the organic substances.

20. Process according to any of Claims 1 to 19,
in which
the extraction is carried out continuously and simultaneously with a reaction proceeding in the bioreactor, with the extraction performance being at least equal to the rate of production in the bioreactor.

21. Process according to any of Claims 1 to 20,
in which
the extraction is carried out from fermentation solutions.

## Revendications

1. Procédé pour la séparation intégrée, à partir d'un bioréacteur, d'une ou plusieurs substances organiques présentes dans le mélange aqueux du bioprocédé, contenant au moins un groupe azoté positivement chargé ou au moins un groupe azoté pouvant être positivement chargé, procédé dans lequel on met en oeuvre une extraction réactive en au moins une étape à l'aide d'un agent d'extraction, procédé dans lequel :
a. le mélange aqueux de bioprocédé est soutiré en continu du bioréacteur, et
b. à l'aide d'un agent d'extraction, qui contient au moins des composés organiques ayant en partie une longue chaîne et au moins un échangeur de cations liquide, est envoyé dans une centrifugeuse liquide-liquide, -
c. subit une extraction à l'aide de l'agent d'extraction, pour donner une phase organique qui contient la substance devant être extraite du mélange de bioprocédé, et
d. le rétentat aqueux obtenu est renvoyé dans le bioréacteur.

2. Procédé selon la revendication 1, **caractérisé en ce que** le mélange de bioprocédé envoyé à la centrifugeuse liquide-liquide de l'étape b. est débarrassé des cellules avant d'être envoyé dans la centrifugeuse.

3. Procédé selon la revendication 2, dans lequel le mélange de bioprocédé envoyé à la centrifugeuse liquide-liquide de l'étape b. est par ailleurs aussi débarrassé des protéines.

4. Procédé selon l'une des revendications 1 à 3, dans lequel le mélange aqueux de bioprocédé est un mélange de fermentation.

5. Procédé selon l'une des revendications 1 à 4, dans lequel la centrifugeuse liquide-liquide de l'étape b. est suivie d'une étape supplémentaire d'extraction, dans laquelle la substance extraite et provenant de la première étape d'extraction est réextraite pour être envoyée dans une phase aqueuse.

6. Procédé selon la revendication 5, dans lequel l'étape supplémentaire d'extraction a lieu elle aussi dans une centrifugeuse liquide-liquide.

7. Procédé selon l'une des revendications 1 à 6, **caractérisé en ce que** la puissance d'extraction, dans la centrifugeuse liquide-liquide de l'étape b., correspond au moins au débit de production dans le bioprocédé.

8. Procédé selon l'une des revendications 1 à 7, dans lequel, dans l'étape b., on utilise les composés organiques à longue chaîne que sont les alcanes, les alcènes ou les esters d'acides gras ayant 6 à 20 atomes de carbone et de préférence 12 à 18 atomes de carbone.

9. Procédé selon la revendication 8, qui dans la centrifugeuse liquide-liquide de l'étape b. utilise en tant qu'échangeurs de cations liquides des esters d'acides inorganiques et de résidus organiques qui de préférence sont ramifiés.

10. Procédé selon la revendication 9, dans lequel on utilise en tant qu'échangeurs de cations acides des esters de l'acide phosphorique, de l'acide phosphoreux, de l'acide sulfurique ou de l'acide sulfureux.

11. Procédé selon l'une des revendications 9 à 10, dans lequel, dans la centrifugeuse liquide-liquide de l'étape b., on utilise en tant qu'échangeurs de cations liquides du phosphate de di-2-éthylhexyle, du phosphate de mono-2-éthylhexyle, du naphtalènesulfonate de dinonyle, ou des mélanges de ceux-ci.

12. Procédé selon l'une des revendications 9 à 11, qui, dans la centrifugeuse liquide-liquide de l'étape b., contient, par rapport à la quantité des composés organiques à longue chaîne, 2 à 25 % en poids, de préférence 5 à 20 % en poids et d'une manière particulièrement préférée 8 à 15 % en poids d'échangeurs de cations liquides.

13. Procédé selon l'une des revendications 1 à 12, dans lequel on extrait des substances organiques choisies dans le groupe des acides aminés aliphatiques et/ou aromatiques, et/ou des lactames, leurs sels, dérivés ou di- ou oligopeptides, ou des mélanges de ces composés.

14. Procédé selon l'une des revendications 1 à 13, dans lequel, dans une étape supplémentaire du procédé
e. la phase organique de l'étape c. est, en circuit fermé, mise en contact avec une phase acceptrice aqueuse, et est réextraite.

15. Procédé selon la revendication 14, dans lequel le contact avec la phase acceptrice aqueuse de l'étape e. a lieu dans une centrifugeuse liquide-liquide, et la phase organique appauvrie ainsi obtenue est, d'une manière continue ou semi-continue, renvoyée dans la centrifugeuse de l'étape b.

16. Procédé selon l'une des revendications 1 à 15, dans lequel le mélange aqueux de bioprocédé de l'étape a. est, dans une étape supplémentaire,
a1) à l'aide d'un bipasse avec module d'ultrafiltration (masse moléculaire de coupure environ 500 kDa), débarrassé des cellules avec renvoi du matériel cellulaire dans le bioréacteur, et on obtient un perméat exempt de cellules, qui est envoyé à l'étape b.

17. Procédé selon la revendication 16, dans lequel, dans une étape supplémentaire, le perméat exempt de cellules
a2) est, à l'aide d'une cassette de filtration sur membrane dans le domaine nanométrique (masse moléculaire de coupure environ 10 à 50 kDa), débarrassé des protéines, avec renvoi de la partie contenant des protéines du perméat exempt de cellules dans le bioréacteur, le perméat obtenu, exempt de cellules et de protéines, étant, avec l'agent d'extraction de l'étape b., envoyé dans la première centrifugeuse liquide-liquide.

18. Procédé selon l'une des revendications 1 à 17, dans lequel, dans les étapes d. et e., on procède à un renvoi complet du rétentat aqueux dans le bioréacteur.

19. Procédé selon l'une des revendications 1 à 18, dans lequel la réextraction a lieu en même temps qu'une concentration des substances organiques.

20. Procédé selon l'une des revendications 1 à 19, dans lequel l'extraction a lieu d'une manière continue ou en même temps qu'une réaction se déroulant dans le bioréacteur, la puissance de l'extraction étant au moins égale au débit de production dans le bioréacteur.

21. Procédé selon l'une des revendications 1 à 20, dans lequel l'extraction a lieu à partir de solutions de fermentation.
